Europäisches Patentamt

European Patent Office

Office européen des brevets

(19)

(11) EP 0 749 934 A2

(12) EUROPÄISCHE PATENTANMELDUNG

(43) Veröffentlichungstag:
27.12.1996 Patentblatt 1996/52

(51) Int Cl.⁶: B66C 13/16

(21) Anmeldenummer: 96103105.1

(22) Anmeldetag: 01.03.1996

(84) Benannte Vertragsstaaten:
AT DE DK FR GB NL SE

(30) Priorität: 02.03.1995 DE 29503416 U

(71) Anmelder:
• Brandmaier Messen, Steuern, Software
72160 Horb (DE)

• Ingenieursbüro Helmut Sudhop
D-28211 Bremen (DE)

(72) Erfinder:
• Sudhop, Helmut, Dipl.-Ing.
28357 Bremen (DE)
• Höhn, Carsten, Dipl.-Ing.
28832 Achim (DE)

(54) **Verfahren und Vorrichtung zur Ermittlung der dynamischen Beanspruchung an Bauteilen, Anlagen und Maschinen**

(57)    Für die maximale Ausnutzung der Lebensdauer eines Hebezeuges ist die exakte Erfassung und Speicherung der Betriebsbeanspruchungen erforderlich. Einfache Betriebsstundenzähler oder grob gestufte Lastkollektivzähler erfüllen diese Aufgabenstellung nur unzureichend.

Das neue Verfahren und die Vorrichtung zur Anwendung des Verfahrens sind so konzipiert, daß die praktisch erreichbare Nutzungsdauer genau der theoretisch vorgegebenen Nutzungsdauer entspricht. Dazu werden die Größen Belastung und Lastwechsel integrativ gekoppelt. So ergibt sich ein Zahlenwert für die verbrauchte Lebensdauer.

Es wird ein Lastkollektivzähler eingesetzt, der die Zählung auf der Grundlage der zurückgelegten Lastwechsel realisiert. Das Grundprinzip besteht darin, daß z.B. an einer rotierenden Welle eines Hebezeuges durch ein Sensorelement die Lastwechselimpulse abgegriffen werden. Dabei gilt: Eine Umdrehung entspricht einem Lastwechsel. Zu jedem Lastwechselimpuls wird der zugehörige Hublastwert ermittelt, digitalisiert und abgespeichert bzw. umgerechnet und angezeigt. Dadurch ist es möglich, die noch vorhandene Restnutzungsdauer jederzeit direkt am Gerät abzulesen.

Fig. 2

**Beschreibung**

Die Erfindung betrifft ein Verfahren und eine Vorrichtung zur Ermittlung der tatsächlichen Beanspruchung von Bauteilen, Anlagen und Maschinen, die dynamischen Belastungen unterliegen. Sie eignet sich insbesondere für die Anwendung bei Hebezeugen und anderen überwachungspflichtigen Maschinen, deren maximale Nutzungsdauer durch die Ausnutzung von vorgegebenen Belastungs- und Laufzeitvorgaben bestimmt wird.

Nach DD 847 343 ist ein Verfahren bekannt, bei dem Meßgrößen, die sich in elektrische Spannungen umwandeln lassen, elektronisch über andere unabhängige Meßgrößen integriert werden. Da das Ergebnis digital vorliegt, eignet sich dieses Verfahren vor allem für eine automatische Meßwerterfassung und Meßwertverarbeitung.

Es existieren weiterhin Lösungen z. B. für Hebezeuge, die eine vereinfachte Erfassung der dynamischen Beanspruchung und deren Zeitverläufe in Form eines Lastkollektivs gestatten. Entsprechende Verfahren und Vorrichtungen sind nach DE 27 37 747 und DE 30 48 964 bekannt.

Der Hintergrund für die übliche Erfassung der Lastkollektive sind die Empfehlungen der Europäischen Vereinigung der Fördertechnik FEM (Fédération Européenne de la Manutention). Danach werden Hebezeuge so ausgelegt, daß sich für den vorgesehenen Einsatzfall eine bestimmte, in Betriebsstunden ausgedrückte Lebenserwartung (Nutzungsdauer) ergibt.

Bei diesem vereinfachten Verfahren werden die erwartete Einsatzhäufigkeit und die voraussichtlichen Betriebsgeschwindigkeiten bzw. die zu erwartenden Fahr-/Hubwege in einer mittleren Laufzeit je Tag und die voraussichtliche Lastverteilung während der Lebensdauer in einem sogenannten Belastungskollektiv durch Schätzungen bzw. mehr oder weniger ungenaue Annahmen vorab ermittelt. Nach diesen geschätzten Annahmen werden die Auswahl und der Nachweis der Hebezeuge durchgeführt.

Solche vereinfachten Verfahren werden üblicherweise auch für die Auslegung von anderen dynamisch beanspruchten Bauteilen herangezogen.

Um sicher zu gehen, werden die belastungsmäßig ungünstigsten Einsatzbedingungen herangezogen, was in vielen Fällen eine Überdimensionierung der Hebezeuge zur Folge hat.

Problematisch ist dabei, daß sich während der Lebensdauer eines Bauteils, einer Maschine oder einer Anlage natürlich erhebliche Abweichungen von den getroffenen Annahmen sowohl nach oben als auch nach unten ergeben können und so eine ständige Überwachung vorzugsweise bei sicherheitsrelevanten Komponenten erforderlich und sinnvoll erscheint.

Die bisher bekannten Lastkollektivzähler erfassen die Größe und Verteilung des Belastungskollektivs nur sehr grob und berücksichtigen nicht die Art und Weise der betrieblichen Beanspruchung bzw. nur dessen durch die Einschaltzeiten definierten zeitlichen Aspekt und können so für eine zuverlässige Lebensdauerabschätzung nur bedingt herangezogen werden.

Auch die bisher bekannten integrativen Meßverfahren, bei denen Meßgrößen in Abhängigkeit vom Weg oder der Zeit summarisch erfaßt werden, können für eine exakte Lebensdauerüberwachung keine Verwendung finden, weil die Lebensdauer eine Bauteils nicht nur vom Weg, sondern auch von der Form und Größe des Belastungkollektivs und des spezifischen Schädigungseinflusses von großen bzw. kleinen Belastungen abhängt. Außerdem ergeben sich bei komplexen Anlagen und Maschinen für die verschiedenen Einzelteile unterschiedliche Lebensdauern dadurch, daß z. B. bei Hebezeugen durch Getriebeübersetzungen bei gleichem Hubweg sehr unterschiedliche Lastwechselzahlen an den einzelnen Bauteilen auftreten.

Insgesamt ist festzustellen, daß die bekannten Erfassungsverfahren und Erfassungsgeräte nicht geeignet sind, eine exakte Erfassung der betriebsfestigkeitsrelevanten Einflußgrößen auf ein Bauteil, eine Maschine oder eine Anlage zu gewährleisten. Deshalb sind belastbare Aussagen zum zurückliegenden Belastungsgeschehen und ein Vergleich mit den angenommenen Auslegungsdaten (z.B. Lastwechsel- bzw. Lastspielzahl, Spannungsamplitude, Spannungsausschlag und Größe der Mittelspannung) nicht möglich. Somit ist eine konsequente Lebensdauerüberwachung bzw. eine maximale Lebensdauerausnutzung praktisch nicht oder nur eingeschränkt realisierbar.

Hier will die Erfindung Abhilfe schaffen.

Aufgabe der Erfindung ist es daher, ein Verfahren und eine Vorrichtung zur Erfassung der dynamischen Beanspruchung von Bauteilen, Anlagen und Maschinen zu entwickeln, wodurch sowohl die Größe und Verteilung des Beanspruchungskollektivs, als auch die Art und Weise der betrieblichen Beanspruchung berücksichtigt und deshalb eine zuverlässige Überwachung und maximale Ausnutzung der Lebensdauer ermöglicht wird.

Diese Aufgabenstellung wird erfindungsgemäß durch einen lastwechselgesteuerten digitalen Lastkollektivzähler gelöst, mit dem eine neue Methode zur Verlängerung der Nutzungsdauer von überwachungspflichtigen Maschinen und Anlagen anwendbar ist. Diese Methode schließt ein Zählverfahren ein, mit dem die praktisch erreichbare Nutzungsdauer im Verhältnis zur vorgegebenen Nutzungsdauer vollständig ausgenutzt werden kann. Dabei wird die jeweils aktuelle Belastung bei jedem Lastwechsel im Sinne der Betriebsfestigkeitheorie -gekennzeichnet durch einen minimalen und einen maximalen Extremwert der Belastung- erfaßt, verarbeitet und aufgezeichnet. Es handelt sich somit um ein technisches Verfahren, was den betriebsfestigkeitstheoretischen Grundgedanken einer summarischen und gewichteten Lastkollektivbildung realisiert, indem eine auf eine beliebige Betriebsfestigkeitstheorie (kubische Mittelwertbildung, MINER, CORTAN / DOLAN usw.) abgestimmte Zählmethode eingesetzt wird.

Das beschriebene Ermittlungsverfahren verknüpft während der Betriebsphase eines Bauteiles, einer Anlage oder einer Maschine die Betriebsfestigkeitsgrößen Lastwechsel und Belastung in intergrativer Weise und liefert einen lebensdaueräquivalenten Zahlenwert.

Zur Überwachung der Nutzungsdauer wird er mit einem bei der theoretischen Auslegung vorgegebenen Betriebsfestigkeitswert, der als Grenzwert nicht überschritten werden darf, verglichen.

Dieses Konzept wird durch die kennzeichnenden Merkmale des 1. Patentanspruchs für das Verfahren und des 2. Patentanspruchs für die Vorrichtung erreicht.

Voraussetzung für eine solche Lösung ist, daß nicht wie bisher die Belastung und die Zeit, sondern die für die Lebensdauererfassung wichtigen Faktoren wie die Belastung und die Lastwechsel berücksichtigt werden.

Die Erfassung der effektiv zurückgelegten Lastwechsel und der dazugehörigen einzelnen Lastkollektivstufen ermöglicht die Ermittlung und ständige Überwachung der schadensäquivalenten Beanspruchung während des betrieblichen Einsatzes.

Die ermittelten Daten werden ohne Auswertung in einem Speicher abgelegt und/oder entsprechend ihrem Beitrag zum Verschleiß (Schädigung) des Bauteils gewichtet und zu einem die Beanspruchung kennzeichnenden Wert aufsummiert.

Beim Erreichen eines zulässigen Grenzwertes kann die Ausgabe eines Warnsignals vorgesehen werden.

Die erfaßten Daten repräsentieren alle schädigungsäquivalenten Einflußgrößen, die sich aus dem betrieblichen Belastungsverlauf ergeben und beinhalten damit alle Eingabegrößen für die bekannten Betriebsfestigkeitstheorien (z.B. nach MINER).

Zu jedem Zeitpunkt sind die absolute Anzahl der Lastwechsel und die dazugehörigen Belastungsgrößen aus dem Speicher abrufbar. Unter der Einbeziehung der sogenannten Wöhlerlinien der Bauteile -einer Werkstoffkenngröße- ist die schadensäquivalente Beanspruchung nach einer beliebigen Betriebsfestigkeitstheorie und damit die aktuelle Bauteilsicherheit, die eine Mindestsicherheit nicht unterschreiten darf, zu bestimmen.

Neben dem Sicherheitsgewinn ergibt sich daraus, daß die mögliche Lebensdauer von dynamisch beanspruchten Bauteilen unter Umständen erheblich verlängert werden kann, wenn sich die bei der Dimensionierung getroffenen Annahmen nachträglich als zu konservativ herausstellen.

Der besondere Vorteil des Verfahrens und der Vorrichtung ergibt sich daraus, daß keinerlei Vorgaben in Form von Lastannahmen, Laststufen, mittlere Wege oder Geschwindigkeiten aus der Projektierungsphase der Anlage/Maschine in das Ergebnis einfließen bzw. keine Annahmen z.B. hinsichtlich einer Lastabstufung für die Beanspruchungserfassung getroffen werden müssen. Vorteilhaft ist weiterhin, daß sich bei rotierenden Bauteilen pro Umdrehung ein Lastwechsel ergibt und sich deshalb aus den Daten der zurückgelegte Weg exakt ermitteln läßt. Daher ist z.B. für drehende Bauteile von Hubwerken eine Bezugnahme zu den Einstufungs- und Uberwachungskriterien für Hebezeuge nach Empfehlungen der Europäischen Vereinigung der Fördertechnik FEM jederzeit gegeben, denn der zurückgelegte Weg steht in einem direkten linearen Zusammenhang zu den in der FEM maßgebenden Betriebsstunden, für die das Hebezeug ausgelegt und nachgewiesen ist.

Außerdem sind direkte Umrechnungen der Daten in Spannungsspielzahlen, Lastarbeitsspiele und die Bildung von aktuellen Spannungskollektiven, wie sie in anderen Vorschriften gefordert werden, möglich.

Alternativ bzw. ergänzend zur einfachen Speicherung der Meßwerte ist die Ermittlung und ständige Überwachung eines beanspruchungsäquivalenten Zahlenwertes vorgesehen. Dazu wird z.B. bei jedem Meßzyklus aus dem aufgenommenen Meßwert der Belastung (z.B. der Hublast) ein Faktor für die relative Beanspruchung $p$ gebildet.

Für Hebezeuge gilt z.B.:

$$p = \frac{\text{aktuelle Gesamtbelastung}}{\text{Tragfähigkeit}}$$

Aus der aktuellen relativen Beanspruchung $p$ wird einer in der Betriebsfestigkeitslehre üblicher aktueller Beanspruchungskennwert $p^3$ gebildet. Die Summe dieser Beanspruchungskennwerte $\Sigma\,p^3$ wird in einem Speicher kumulativ erfaßt und stellt einen zuverlässigen Kennwert für den bisherigen Lebensdauerverbrauch dar.

Ein entsprechend zu überwachender Grenzwert $\mathbf{max}\,\Sigma\,\mathbf{p}^3$ kann mit den Mitteln der Betriebsfestigkeitslehre leicht vorab bestimmt werden. Üblicherweise ist er als Auslegungskennwert des Bauteils / der Anlage bereits bekannt. Selbstverständlich ist es auch vorgesehen, bei Bedarf den Beanspruchungskennwert in jeden Meßzyklus nach einer anderen Betriebsfestigkeitstheorie z.B. nach der Hypothese der linearen Schadensakkumulation (MINER-Regel) zu berechnen und einem vorgegebenen Grenzwert (z.B. max a) gegenüberzustellen.

Die Erfindung wird nachstehend anhand eines Ausführungsbeispieles und mit Bezug auf die Zeichnung näher erläutert. Es zeigen

Fig. 1:    ein Gerät zur Ermittlung der dynamischen Beanspruchung für ein Hebezeug,

Fig. 2:    das Gerät nach Fig. 1 in einer erweiterten Ausführung,

Fig. 3:    das Gerät nach Fig. 2 ohne interne Speicherung und

Fig. 4:    die Erfassung der Lastwechsel am Hauptträger eines Brückenkranes.

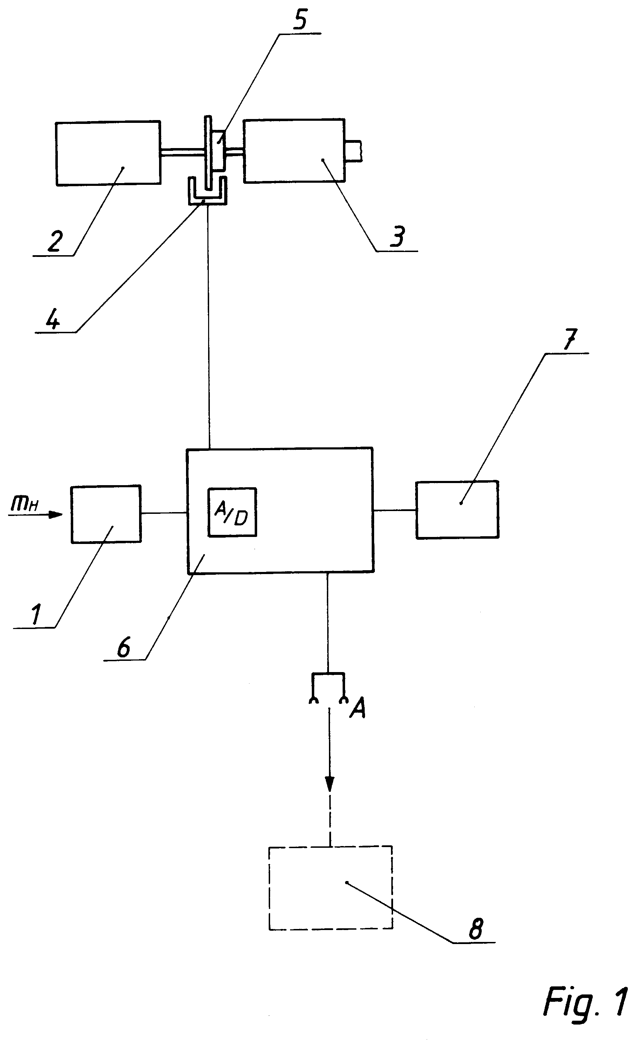

Das Hebezeug ist nach Fig. 1 mit einer bekannten Meßeinrichtung 1 für die Hublast versehen. Ein solche Meßeinrichtung 1 kann aus einem am Seilfestpunkt angebrachten und mit einem elektronischen Meßverstärker versehener Meßbolzen bestehen. Die Meßeinrichtung 1 liefert im Betriebszustand ein stetiges belastungsproportionales Meßsignal.

Im Verbindungsstrang zwischen dem Hubmotor 2 und dem Getriebe 3 ist eine Lichtschranke 4 so angeordnet, daß pro Lastwechsel (= Umdrehung) der Welle des Hubmoters 2 ein Impuls erzeugt wird. Dazu ist z.B. die Bremsscheibe 5 der dort angebrachten Scheibenbremse mit einer Bohrung versehen. Die lastwechselproportionale Impulsfolge wird auf einen Logikbaustein 6 geführt, der bei jedem ankommenden Impuls den anliegenden Meßwert der aktuellen Hublast aus der Meßeinrichtung 1 einliest, digitalisiert und den Zahlenwert im Speicher 7 ablegt.

Damit steht für je einen Lastwechsel der Motorwelle ein Zahlenwert im Speicher 7. Die Anzahl der gespeicherten Zahlenwerte entspricht somit exakt der Anzahl der lebensdauerbestimmenden Lastwechsel an der Motorwelle und außerdem der Anzahl der Umdrehungen des Hubmotors 2 und der Eingangswelle des Getriebes 3.

Daraus lassen sich die exakte Anzahl der Lastwechsel für jedes Getriebebauteil sowie aller anderen Hubwerksbauteile bestimmen. Die Kontrolle und Überwachung des Lebensdauerverbrauches all dieser Bauteile ist dadurch sehr einfach möglich.

Über einen externen Ausgang A werden in festgelegten Zeitabständen z.B. bei der jährlichen Inspektion die gespeicherten Daten durch einen angeschlossenen Computer 8 ausgelesen, extern verarbeitet und bewertet. Nach dem Auslesen wird der Speicher 7 wieder auf Null gestellt. Die Erfassung kann im nächsten Zyklus neu beginnen.

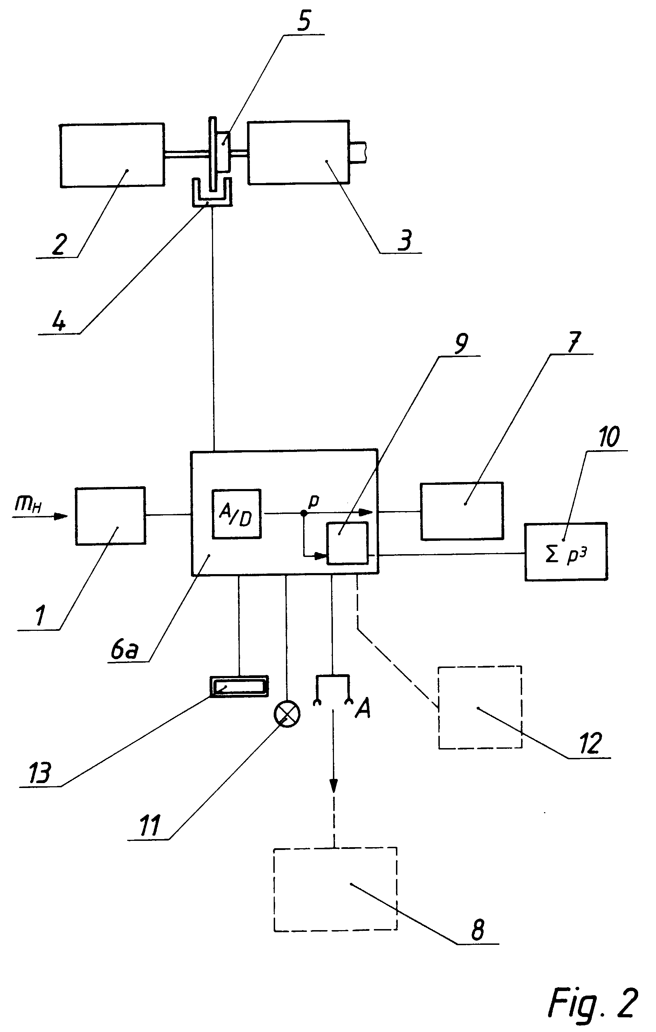

Nach Fig. 2 ist der Logikbaustein 6a alternativ zusätzlich mit einem als Digital-Potenzierer 9 ausgebildeten Verarbeitungsbaustein versehen, der aus dem relativen Beanspruchungsfaktor $p$ den Wert $p^3$ bildet. Dieser Wert repräsentiert einen schadensäquivalenten Belastungswert für einen Lastwechsel und wird im Speicher 10 summarisch aufgespeichert.

Wird dabei der vorgegebebene Grenzwert $max \Sigma$ $p^3$ überschritten, ist die Auslösung einer Alarmmeldung vorgesehen.

Der Alarm kann auch z. B. durch Überschreiten einer maximal zulässigen Hublast oder durch das Erreichen der Speichergrenze des Speichers 7 ausgelöst werden.

Die Einspeisung des Alarmsignals und/oder der Speicherdaten in eine vorhandene Kransteuerung 12 und die Anzeige der Restlebensdauer bzw. des Speicherinhalts des Speichers 10 durch eine digitale Anzeige 13 ist ebenfalls alternativ vorgesehen.

Wie bei der einfachen Ausführung nach Fig. 1 werden die gespeicherten Daten in bestimmten Zeitabständen ausgelesen, verarbeitet und bewertet. Zur Archivierung und zum Nachweis wird ein Protokoll über die gesammelten Daten und die noch verbleibende Restlebensdauer erstellt.

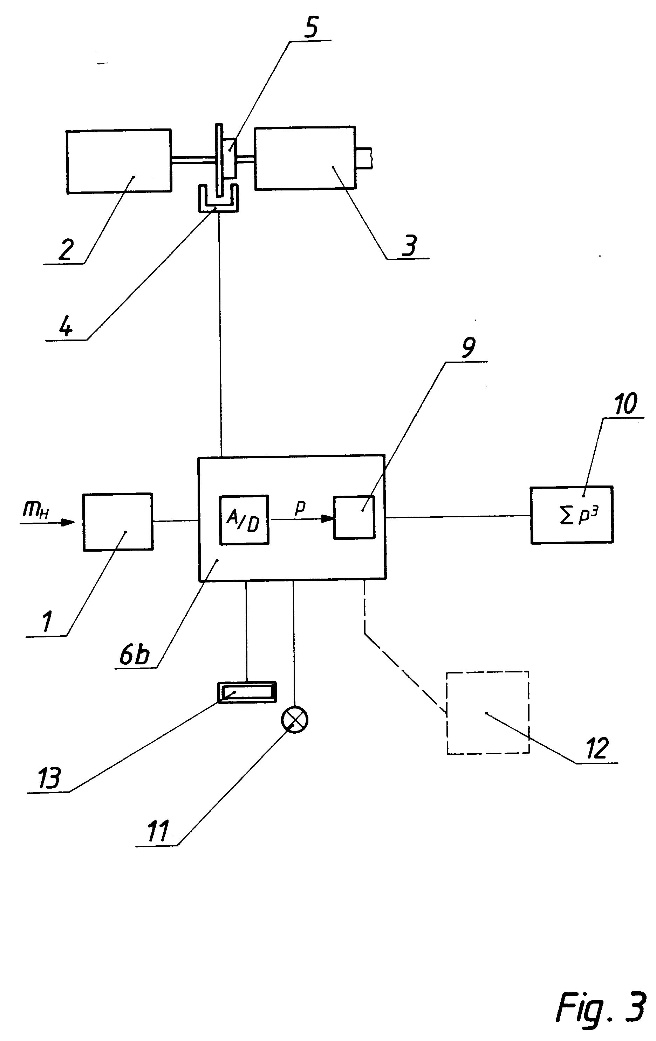

In Fig. 3 ist ein Lebensdauerüberwachungsgerät ohne Speicherung der Einzeldaten dargestellt.

Der Aufbau entspricht im wesentlichen dem System nach Fig. 2. Es wird lediglich auf die interne Speicherung der Einzeldaten verzichtet.

Auch hier verarbeiten die Logikbausteine 6b, wie oben beschrieben, bei jedem eintreffenden Lastwechselimpuls einen anliegenden Meßwert aus der Lastmeßeinrichtung 1 zu einem Beanspruchungsfaktor $p$; der Digital-Potenzierer 9 bildet den Belastungswert $p^3$ und im Speicher 10 wird die kumulative Summe $\Sigma\ p^3$ gespeichert.

Die Auslösung einer Alarmmeldung erfolgt wie bei der vorstehend beschriebenen Variante nach Fig. 2.

Die Einspeisung des Alarmsignals und/oder der Speicherdaten in eine vorhandene Kransteuerung 12 und die Anzeige der Restlebensdauer durch eine digitale Anzeige 13 ist ebenfalls vorgesehehn.

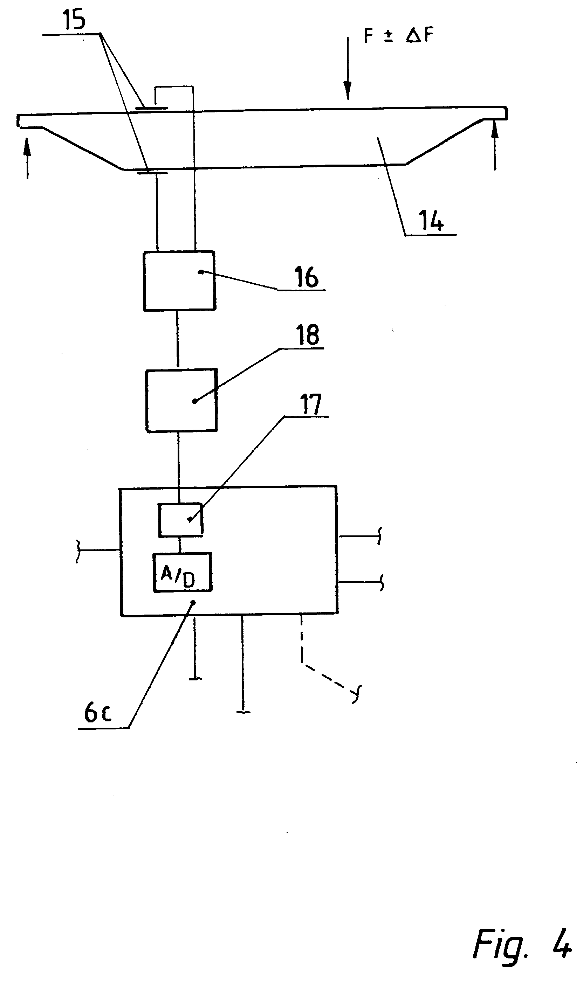

In Fig. 4 ist die Erfassung der Lastwechsel an einem translatorisch beanspruchten Bauteil 14, dem Hauptträger eines Brückenkranes, dargestellt. Die belastungsabhängigen, zeitlich veränderlichen Beanspruchungen (Schwingungen) werden durch aufgeklebte Dehnungsmeßstreifen 15 in einen elektrischen Meßwert umgewandelt. Dazu wird ein bekannter Meßverstärker 1 6 verwendet.

Als zusätzlichen Baustein enthält der Logikbaustein 6c einen Extremwertschalter 17, der nach dem zeitlichen Durchlauf je eines minimalen und eines maximalen Extremwertes den A/D-Wandler zum Einlesen des aktuellen Belastungswertes startet. Ein vorgeschalteter Dämpfungsbaustein 18 filtert unerwünschte Oberschwingungen heraus.

Damit wird wieder für jeden durchlaufenden Lastwechsel -gekennzeichnet durch einen positiven und negativen Extremwert- ein Beanspruchungs- /Belastungswert ermittelt und, wie oben beschrieben, gespeichert bzw. weiterverarbeitet.

Die Auswertung erfolgt je nach Erfordernis wie vorstehend nach den Gerätevarianten nach den Fig. 1, 2 oder 3 beschrieben.

**Patentansprüche**

1. Verfahren zur Ermittlung der dynamischen Beanspruchung an Bauteilen, Anlagen und Maschinen durch die Erfassung und Speicherung der realen Betriebsbeanspruchungen,
gekennzeichnet dadurch, daß

- die aktuelle und reale Belastung bei jedem Lastwechsel, gekennzeichnet durch einen maximalen und einen minimalen Extremwert der Beanspruchung oder einen entsprechenden Spannungsvorzeichenwechsel, erfaßt wird,

- pro Lastwechsel eines zu überwachenden oder für die Anlagenbeanspruchung stellvertretenden Bauteils einer oder mehrere Belastungswerte über mehrere Lastwechsel erfaßt oder ein mittlerer Belastungswert über mehrere Lastwechsel gebildet wird,

- die ermittelten Daten der Belastung hintereinander in einem Speicher (7) abgelegt werden und/oder daraus nach einer beliebigen Betriebsfestigkeitstheorie ein belastungskennzeichnender Wert gebildet und in einem zusätzlichen Speicher (10) aufsummiert abgelegt wird,

- bei Überschreitung eines oder mehrerer vorgegebener Grenzwerte, z.B. der Einzelbelastung, des summarischen Gesamtbelastungswertes oder der Anzahl der Lastwechsel ein Alarmsignal (11) ausgelöst wird,

- bestimmte Zusatzinformationen aus den Speicher (7) und (10) jederzeit zur Kontrolle und ständigen Überwachung abrufbar sind,

- in bestimmten Zeitabständen die gespeicherten Daten ausgelesen, weiterbearbeitet, archiviert und/oder zur Anzeige gebracht werden,

- alternativ die Daten getrennt nach Heben und Senken ermittelt und gespeichert werden,

- zur Erfassung der Lastwechsel ein maximaler und ein mimimaler Extremwert herangezogen und diese Erfassung entweder an rotatorisch oder translatorisch beanspruchten Bauteilen vorgenommen wird,

- dadurch ein oder mehrere Impulse pro Lastwechsel erzeugt werden, die in einem angeschlossenen Logikbaustein (6x) das Einlesen eines kontinuierlich anliegenden Belastungskennwertes aus einer Belastungsmeßeinrichtung (1) startet,

- dieser Meßwert im Logikbaustein (6x) digitalisiert und im Speicherbaustein (7) abgelegt wird,

- dieser Vorgang bei jedem ankommenden Lastwechselimpuls wiederholt wird,

- alternativ aus dem digitalisierten Meßwert ein Faktor für die relative Belastung, daraus in einem zusätzlichen Verarbeitungsbaustein (9) ein schädigungsäquivalenter Wert gebildet und im Speicher (10) summarisch erfaßt wird,

- der Logikbaustein (6x) mit der Steuerung (12) verbunden ist und dadurch die Überwachung eines vorgegebenen Lebensdauergrenzwertes bzw. die Übergabe eines Alarmsignales erfolgt,

- die Größe des Speicherinhaltes der Speicher (7) und (10) jederzeit über den Ausgang A durch einen externen Computer (8) oder direkt durch die Steuerung (12) festgestellt, verarbeitet und zur Anzeige gebracht werden kann und

- alternativ eine kontinuierliche Anzeige des aufbereitetenden Speicherinhalts des Speichers (10) durch eine Restlebensdaueranzeige (13) vorgesehen ist.

2. Vorrichtung zur Ermittlung der dynamischen Beanspruchung an Bauteilen, Anlagen und Maschinen für die Anwendung des Verfahrens nach Anspruch 1, die als lastwechselgesteuerter digitaler Lastkollektivzähler ausgebildet ist, gekennzeichnet durch

- eine Meßeinrichtung (1) für die Belastung,
- eine zweite Meßeinrichtung (4) für die Lastwechsel,
- einen mit den beiden Meßeinrichtungen (1) und (4) verbundenen Logikbaustein (6) zum Einlesen und Digitalisieren der Meßwerte,
- einen Speicher (7) zum Ablegen (Speichern) der gemessenen Werte,
- einem externen Ausgang A für den Anschluß eines Computers (8), durch den die gespeicherten Daten bei der Inspektion ausgelesen, extern verarbeitet und bewertet werden

als Grundelemente der Vorrichtung und

- einen Verarbeitungsbaustein (9), der als Zusatz zum Logikbaustein (6) aus dem Beanspruchungsfaktor den aktuellen Beanspruchungskennwert bildet,
- einen zweiten Speicher (10) zur summarischen Speicherung des aktuellen Beanspruchungskennwertes,
- einen Alarmausgang,
- einer digitalen oder analogen Verbindung zur Steuerung 12 und
- einer Restlebensdaueranzeige

als Zusatzelemente der Vorrichtung für die Anwendung eines erweiterten Verfahrens.

3. Vorrichtung zur Ermittlung der dynamischen Beanspruchung an Bauteilen, Anlagen und Maschinen nach Anspruch 2, gekennzeichnet dadurch, daß zur Erfassung der Lastwechsel

- an rotatorisch beanspruchten Bauteilen eine Lichtschranke (4) oder ein vergleichbares berührungsloses Geberelement eingesetzt wird und
- an translatorisch beanspruchten Bauteilen ebenfalls Geberelemente eingesetzt werden, welche die Erfassung eines maximalen und minimalen Extremwertes durch einen Extremwertschalter (17) gestatten.

Fig. 1

Fig. 2

Fig. 3

Fig. 4